Europäisches Patentamt

(19) European Patent Office

Office européen des brevets

(11) Publication number : **0 206 535**
**B1**

(12) **EUROPEAN PATENT SPECIFICATION**

(45) Date of publication of patent specification :
07.03.90

(51) Int. Cl.⁵ : **B 01 J 35/04, C 01 B 3/38**

(21) Application number : 86303964.0

(22) Date of filing : 23.05.86

(54) Secondary reforming process using a catalyst supported on an alumina honeycomb strucuture.

(30) Priority : 06.06.85 GB 8514344

(43) Date of publication of application :
30.12.86 Bulletin 86/52

(45) Publication of the grant of the patent :
07.03.90 Bulletin 90/10

(84) Designated contracting states :
AT BE CH DE FR GB IT LI LU NL SE

(56) References cited :
EP—A— 0 073 150
FR—A— 1 378 907
FR—A— 2 328 656
GB—A— 1 478 899
GB—A— 2 022 071
US—A— 4 337 178

(73) Proprietor : IMPERIAL CHEMICAL INDUSTRIES PLC
Imperial Chemical House Millbank
London SW1P 3JF (GB)

(72) Inventor : Davidson, Peter John
25 The Green Hurworth-on-Tees
Darlington County Durham (GB)
Inventor : Fowles, Martin
14 Milbank Court
Darlington County Durham (GB)

(74) Representative : Gratwick, Christopher et al
Imperial Chemical Industries PLC Legal Department:
Patents PO Box 6 Bessemer Road
Welwyn Garden City Herts, AL7 1HD (GB)

## Description

This invention relates to a catalyst support and in particular to the support for the catalyst for use in the secondary steam reforming of hydrocarbons.

In the production of hydrogen-containing gas streams a hydrocarbon feedstock is often subjected to a primary steam reforming process wherein the feedstock and steam are contacted with a catalyst, typically nickel supported on a low silica support such as calcium aluminate cement, usually disposed in externally heated tubes. The primary reformed gas mixture is then often subjected to a secondary reforming step wherein the primary reformed gas is partially combusted with an oxygen-containing gas, eg oxygen itself or air (where it is desired to introduce nitrogen into the gas stream, eg as in the manufacture of ammonia synthesis gas), and the combustion products are contacted with a secondary reforming catalyst.

The catalyst inlet and outlet temperatures in the secondary reforming stage are generally considerably higher than in the primary reforming stage. Typically the secondary reforming catalyst inlet temperature is in the range 1050 to 1300 °C while the outlet temperature is typically in the range 900 to 1050 °C. The catalyst support employed in the secondary reforming stage has thus to withstand such high temperatures. Heretofore the conventional catalyst for secondary reforming has been nickel supported on rings formed from a calcium aluminate cement or alumina composition. In order to effect the desired reaction, the volume of the secondary reforming catalyst bed has heretofore been relatively large, typically 30 m³ or more in a plant producing 1000 t/day of ammonia. By the abbreviation « t » in this specification we mean a metric ton, ie 1000 kg. Expressed in other terms, the volume of the secondary reforming catalyst bed has been of the order of 1.5 to 3 m³ per t. mol/hr of gas leaving the secondary reformer. Such large volume catalyst beds have of course necessitated large vessels with consequent high cost of fabrication, particularly where, as is often the case, operation at pressures significantly above atmospheric is required.

It has been proposed in GB-A-1511789 to employ as the catalyst for a steam reforming reaction a random packed bed of catalyst units each of which has the form of an active metal supported on a partitioned ring made of alpha alumina.

It has also been proposed in EP-A-73150 to employ as a catalyst a unit, or stack of units, each having a plurality of channels therethrough aligned in the direction of flow of the reactants. Such units may thus have a « honeycomb » configuration support which may be made, for example, by rolling up superimposed flat and corrugated sheets of metal.

The manufacture of ceramic units having a plurality of through passages, for use as steam reforming catalyst supports, from alpha alumina is described in EP-A-134138.

We have found that, by the use of a particular secondary reforming catalyst support having a plurality of through passages, it is possible to reduce considerably the volume of the secondary reforming catalyst bed, and hence the size of the vessel required for secondary reforming. Indeed in the present invention the secondary reforming bed volume is typically less than one tenth of the volume employed with a conventional support.

As will be explained hereinafter this reduction in the catalyst bed volume has additional advantages in a preferred form of the invention.

Accordingly the present invention provides a hydrocarbon secondary steam reforming process wherein a primary reformed hydrocarbon gas stream, containing steam, is partially combusted with an oxygen-containing gas and the combustion products are contacted with a metallic catalyst on a support of a composition comprising at least 95 % by weight of alpha-alumina, less than 0.2 % by weight of silica, less than 0.5 % by weight of alkali, and 0 to 5 % by weight of at least one oxide selected from titania, zirconia, and rare earth oxides, said support having a plurality of through passages and an open area of 40 to 85 %,

characterised in that said support comprises a single unit, or an assembly of polygonal units packed side by side, disposed so that the passages extend through the unit in the direction of the flow of said combustion products, each unit having 15 to 40 through passages, per cm² of unit cross sectional area in the direction perpendicular to the flow of said combustion products, the dimensions of said passages being such that said unit, or assembly of units, has a geometric surface area per volume occupied by said unit, or assembly of units, of 10 to 30 cm⁻¹, and the size of said unit, or assembly of units is such that the volume occupied by said unit, or assembly of units, is 0.05 to 0.4 m³ per t. mol/hr of gas leaving the unit, or assembly of units.

The, or each, unit preferably contains over 99.5 % by weight of alpha-alumina. The silica content should be below 0.2 % by weight since silica is volatile in the steam-containing gas stream at the temperatures employed and so any silica present will tend to be leached out and deposited in cooler parts of the plant. Such deposited silica is liable to cause blockage and/or form a coating on subsequent catalytic beds thereby preventing full access of reactants thereto. Titania and/or zirconia, if present, may be present as sintering aids, while rare earth oxides may be present as stabilisers.

The unit or units preferably have the following micromeritic properties :

| | |
|---|---|
| BET Surface area : | 0.1 to 2.0, especially about 0.2, $m^2.g^{-1}$ ; |
| Helium density : | over 3.8, especially 4.0, $g.m^{-3}$ ; |
| Mercury density : | 1.5 to 4.0, especially 1.9 to 2.0, eg 1.96, $g.cm^{-3}$ ; |
| Pore volume : | 0 to 0.4, especially 0.2 to 0.3, eg 0.26, $cm^3.g^{-1}$ ; |
| Pore radius : | over 1000, eg 1700, nm. |

The unit, or assembly of units, preferably has an overall circular cross section having a diameter of over 1.5, especially 7 to 200 cm. The unit, or units, each preferably have a depth of 5 to 30 cm.

The, or each, unit is of a monolithic configuration having a plurality of passages extending through the unit in the direction parallel to the direction of flow of the combustion products. The monolith has an open area of 40 to 85, especially 50 to 60 % and the passages are of such size that there are 15 to 40 passages per $cm^2$ of unit cross section in the direction perpendicular to the flow of the combustion products. The passages may have a triangular, square, rectangular, hexagonal, or curved, eg circular, cross section. This thickness of the walls between adjacent passages is preferably 0.03 to 0.08 cm.

The geometric surface area per volume occupied by the unit, or assembly of units, is 10 to 30, preferably at least 15 $cm^{-1}$.

The secondary reformer may contain a single unit bearing the active catalyst, or an assembly of a plurality of active catalyst-bearing units, each having a polygonal, eg hexagonal or square, cross section supported side by side. If desired the secondary reformer catalyst bed may comprise more than one layer, each layer comprising a single unit or an assembly of units as aforesaid.

The support can be made by known methods such as oxidising a corresponding metallic aluminium structure or applying an alumina precursor to a fugitive carrier such as paper or extruding a composition comprising alumina and a polymer. In each case a calcination stage usually follows shaping in order to produce a support having the desired micromeritic properties. A suitable extrusion method is described in our EP-A-134138.

The secondary reforming catalyst supported on the aforementioned support structure will normally be a metal from Group VIII of the Periodic Table, and is especially nickel and/or cobalt and/or a platinum group metal, especially rhodium. Where the metal is nickel and/or cobalt, the amount thereof is preferably 2 to 22 % by weight calculated as the oxide. Where the metal is a platinum group metal, the amount thereof is preferably 0.05 to 5 % by weight calculated as metal. In order to obtain a satisfactory loading of the catalytic metal, the support may be given one or more coats of a porous support material such as alumina of BET surface area 15 to 200 $m^2.g^{-1}$ prior to incorporation of the active metal or a compound convertible thereto.

In conventional plants the volume occupied by the secondary reforming catalyst is usually within the range 50 to 200 %, and typically about 80 to 120 %, of the volume occupied by the primary reforming catalyst, ie the total of the volumes of the catalyst filled spaces within the primary reformer. As indicated above, in the present invention, the volume occupied by the secondary reforming catalyst unit, or assembly of units, is much smaller than in conventional plants and is typically between 3 and 40, particularly 5 to 25 % of the volume occupied by the primary reforming catalyst.

In the hydrocarbon secondary steam reforming step, the primary reformed gas, containing steam, is reacted with an oxygen-containing gas such as oxygen, air, or oxygen enriched, or oxygen depleted, air. The primary reformed gas stream will normally consist of carbon oxides, hydrogen, steam, and methane. The proportions of these constituents will normally depend on the conditions employed in the primary reforming stage. The methane content will normally be within the range 8 to 30 % by volume. In some cases it may be desirable to add an additional amount of the hydrocarbon feedstock and/or steam to the primary reformed gas stream before the latter is fed to the secondary reformer. In the secondary reformer, the primary reformed gas-containing feed is mixed, normally at a burner, with the oxygen-containing gas, and partial combustion takes place, normally giving a flame ; the combustion products are then fed to the secondary reforming catalyst as described above. The secondary reforming conditions are normally selected so as to give a secondary reformed gas containing 0.1 to 2 % by volume of methane (dry basis). Typical secondary reforming conditions are as follows :

| | |
|---|---|
| Catalyst inlet temperature : | 1050 to 1300, especially 1100 to 1250, °C ; |
| Catalyst outlet temperature : | 900 to 1050 °C ; |
| Pressure : | 25 to 50 bar abs. ; |
| Outlet flow rate : | 10 to 15 t.mol/hr ; |
| Outlet steam content : | 15 to 50 % by volume |

Where the process is used to produce ammonia synthesis gas, the amount of oxygen containing gas, which is normally air, oxygen enriched air, or oxygen depleted air, may be controlled so as to give an approximately stoichiometric ammonia synthesis gas (wherein the ratio of the sum of the molar flow rates of hydrogen and carbon monoxide to the molar flow rate of nitrogen in the outlet gas is in the range 2.5 to 3.1) or a hydrogen deficient gas wherein that ratio is for example in the range 1.25 to 2.5, especially 1.4 to 2.1. In order to convert the secondary reformed gas into ammonia synthesis gas, the secondary reformed gas is normally subjected to the shift reaction, in one or more stages, and then carbon oxides are removed. Where the secondary reformer outlet gas is hydrogen-deficient as aforesaid, carbon oxides and the excess of nitrogen may be removed by a pressure swing adsorption process as described in our EP-A-157480, followed by methanation if necessary.

The use of the high purity alumina support has the advantage of very low migration of alkali and silica even at high operating temperatures and this leads to an increase in the catalyst life. Also the use of the catalyst in the form of active metal, particularly where the latter is rhodium or platinum, supported on a monolithic structure has the advantage that not only is the volume of the catalyst bed required relatively small, but also that a more complete approach to equilibrium with reduced pressure drop can be achieved. The approach to equilibrium is typically 1.2 °C in contrast to an approach of about 5 °C when using a conventional secondary reforming catalyst.

As mentioned above the primary reforming stage is normally conducted by passing a mixture of the hydrocarbon feedstock (which normally has an atmospheric pressure boiling point below 220 °C and is preferably natural gas or naphtha) through tubes containing the primary reforming catalyst while the tubes are heated from an external source. Often the tubes are heated in a directly fired furnace but it has been proposed, for example in US-A-3442613, to provide the heat required for primary reforming from the outlet gas from the secondary reformer. An example of a suitable primary reformer which can be heated by the secondary reformer outlet gas is described in EP-A-194067.

With this type of primary reforming where the heat required for primary reforming is supplied by the heat in the outlet gas from the secondary reformer, the present invention is particularly advantageous. Thus, with the conventional type of secondary reforming catalyst, the secondary reforming catalyst support has a relatively large mass compared to the supports of the present invention and so, in use, carries a large amount of heat. Should it be necessary to shut the plant down in the event of a malfunction, or for routine maintenance, this heat carried by the secondary reforming catalyst support has to be dissipated. With conventional plants, where heat is recovered from the secondary reformer outlet gas by steam raising, there is no serious problem in dissipating this heat since continued passage of the hydrocarbon feedstock and steam, or steam alone, through the primary reformer, after shutting off the supply of heat to the primary reformer and the supply of oxygen containing gas to the secondary reformer, will rapidly sweep the heat carried by the secondary reforming catalyst support downstream where it can be absorbed by steam raising. However where the primary reformer is heated by the secondary reformer outlet gas, shutting off the supply of feedstock to the primary reformer will mean that the heat in the secondary reformer outlet gas is no longer used to provide the endothermic heat of reaction in the primary reformer. This has as a result the risk that the primary reformer will become overheated with the risk of serious damage thereto. Continuing the supply of hydrocarbon feedstock to the primary reformer, so that the heat carried by the secondary reformer is absorbed by the endothermic reforming in the primary reformer while the secondary reformer cools can present hazards, eg where shut down is required as a result of a leak in the system and/or may not be possible, eg where there is failure of the hydrocarbon feedstock supply.

Using the secondary reforming catalyst support of the present invention has the advantage that far less heat is carried by the secondary reforming catalyst support and so can be dissipated into the primary reformer without risk of overheating the latter.

The invention also provides a hydrocarbon steam reforming process wherein a hydrocarbon feedstock is primary reformed with steam by contact of the a mixture of the feedstock and steam with a primary reforming catalyst disposed in heated tubes and the resulting primary reformed gas, optionally with a further quantity of hydrocarbon feedstock, is then partially combusted with an oxygen-containing gas and the resulting combustion products are fed over a secondary reforming catalyst as hereinbefore described, said primary reforming tubes being heated by the secondary reformed gas leaving the secondary reforming catalyst.

The invention also provides apparatus comprising, in combination :

a) a plurality of tubes for containing a primary steam reforming catalyst ;
b) means to feed a hydrocarbon feedstock and steam to said tubes ;
c) means to heat the exterior of said tubes ;
d) a burner ;
e) means to feed an oxygen-containing gas to the burner ;
f) means to feed gas from the outlet of said tubes to said burner ;
g) a supported secondary reforming catalyst downstream of said burner, the support of said catalyst comprising at least 95 % by weight of alpha-alumina, less than 0.2 % by weight of silica, less than 0.5 % by weight of alkali, and 0 to 5 % by weight of at least one oxide selected from titania, zirconia, and rate earths, and having a plurality of through passages and an open area of 40 to 85 %,

characterised in that

i) said means to heat the tubes comprises means to feed secondary reformed gas leaving the secondary reforming catalyst past the exterior of said tubes whereby heat in said secondary reformed gas may be transferred to said tubes ; and

ii) said support comprises a single unit, or an assembly of polygonal units packed side by side, disposed so that the passages extend through the unit in the direction of the flow of combustion product from said burner, each unit having 15 to 40 through passages, per $cm^2$ of unit cross sectional area in the direction perpendicular to said flow of said combustion products, the dimensions of said passages being such that said unit, or assembly of units, has a geometric surface area per volume occupied by said unit, or assembly of units, of 10 to 30 $cm^{-1}$, and the size of said unit, or assembly of units, is such that the volume occupied by said unit, or assembly of units, is 3 to 40 % of the volume of the space within said tubes for containing said primary steam reforming catalyst.

In such a combination the primary reformer tubes, the burner, and secondary reforming catalyst may be within the same vessel as described, for example, in EP-A-124226, but, preferably, they are in separate vessels, for example as described in the aforesaid EP-A-194067 with insulating means to minimise the temperature difference of the primary reformed gas between leaving the catalyst-containing regions of said primary reforming tubes and mixing with the oxygen-containing gas at the burner.

The invention is illustrated by reference to the accompanying drawings wherein

Figure 1 is an isometric view of a honeycomb support unit,

Figure 2 is an enlarged view of part of one end of the unit of Figure 1.

Figure 3 is a diagrammatic plan of part of an assembly of units of the type shown in Figures 1 and 2,

Figure 4 is a diagrammatic cross section of a primary reformer and secondary reformer incorporating a catalyst of the invention.

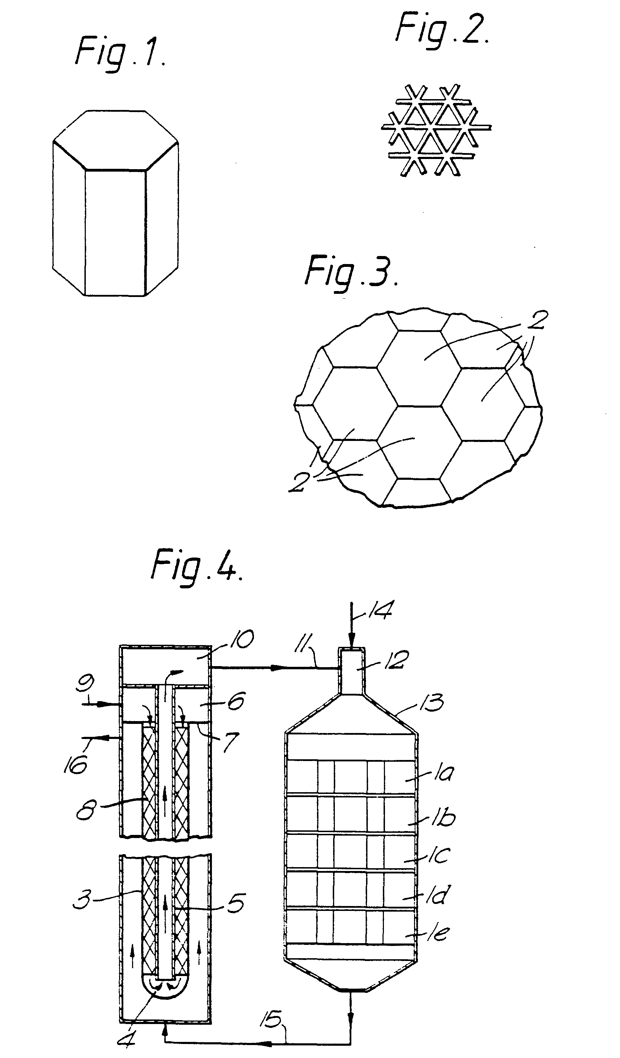

In an example an alpha alumina composition was extruded by the process of EP-A-134138 to give a honeycomb, having a regular hexagonal external configuration as shown in Figure 1, which was then dried and fired at 1 500 °C for 4 hours.

Fired honeycomb pieces, having a length of 20 cm and a distance across the hexagon flats of about 15.4 cm, had passages of equilateral triangular cross section configuration, as shown in Figure 2, extending through their length. The wall thickness between adjacent passages was 0.5 mm. The honeycomb had an open cross sectional area of 57.76 %, a geometric surface area per unit volume of 14.36 $cm^{-1}$ and 17.2 passages per $cm^2$ of cross sectional area.

Analysis showed that the fired honeycomb pieces contained over 99.6 % by weight of alpha alumina, 0.12 % by weigh of silica, 0.04 % by weight of iron oxide (expressed as $Fe_2O_3$), and 0.04 % by weight of sodium oxide. The units had the following micromeritic properties :

| | |
|---|---|
| BET surface area | 0.28 $m^2.g^{-1}$ |
| Helium density | 4.0 $g.cm^{-3}$ |
| Mercury density | 2.03 $g.cm^{-3}$ |
| Pore volume | 0.25 $cm^3.g^{-1}$ |
| Pore radius | 1 760 nm |

The honeycomb support pieces were impregnated with rhodium by dipping in an aqueous solution of rhodium nitrate followed by drying and calcination for 4 hours at 450 °C until the resultant catalyst contained 0.2 % by weight of rhodium.

Experimental measurement of the activity of the catalyst shows that the volume of the supported catalyst required for secondary reforming of a primary reformed gas, of the composition and under the conditions set out in the following table, is about 0.54 $m^3$, arranged in an assembly of five layers la-le as shown in Figure 4, each layer separated from an adjacent layer by 2.5 cm and, as shown in Figure 3, being composed of a number of the hexagonal units 2 packed side-by-side.

(See Table page 6)

| | Inlet | | | |
|---|---|---|---|---|
| | Primary reformed Gas | Air | Outlet Gas | |
| Temperature ($^{o}$C) | 715 | 670 | 972 | |
| Pressure (bar abs.) | 38.0 | 39.2 | 37.3 | |
| Flow rate (t mol.hr) | 2.92 | 1.33 | 4.78 | |
| Composition (% v/v) | | | | |
| Methane | 14.7 | - | 0.5 | |
| Oxygen | - | 20.9 | - | |
| Carbon monoxide | 2.4 | - | 8.6 | |
| Carbon dioxide | 4.5 | <0.1 | 4.1 | |
| Hydrogen | 31.6 | - | 34.6 | |
| Nitrogen | 3.0 | 77.7 | 23.4 | |
| Argon | 1.0 | 0.9 | 0.9 | |
| Steam | 42.7 | 0.4 | 27.8 | |
| Ammonia | <0.1 | - | <0.1 | |

To obtain the primary reformed gas using apparatus as described in the aforesaid EP-A-194067 and as shown diagramatically in Figure 4 wherein the primary reformer tubes 3 are heated by the secondary reformed gas, a volume of primary reforming catalyst of about 5 m$^3$ is required. The secondary reformer outlet gas is that required in an ammonia plant producing about 550 t/day of ammonia.

In the arrangement of Figure 4, the primary reformer tubes 3 (only one of which is shown ; in practice there will be a large number of such tubes) have a closed end 4 and have an inner tube 5, extending from the closed end 4 through the length of the tube 3 and through a plenum chamber 6 above a tube plate 7 supporting the tube 3. Tube 5 carries a layer of insulation to minimised heat transfer from the gas within tube 5 into the annular space 8 between the outer wall of tube 5 and the inner wall of tube 3. The primary reforming catalyst is disposed in this annular space 8.

In operation the primary reformer feedstock and steam is fed to plenum chamber 6 via line 9 and passes down the catalyst filled annular space 8 to the closed end of the tube 3. The primary reformed gas then passes up through tube 5 into a plenum chamber 10 at the top of tube 5 and then is fed, via line 11, to the burner 12 of the secondary reformer 13. Air is fed to the burner 12 via line 14 and the primary reformed gas is partially combusted, with the formation of a flame at the burner. The combustion products are then fed through the layers la-le of the honeycomb units wherein secondary reforming takes place. The secondary reformed gas is then fed, via line 15, to the primary reformer where the hot, secondary reformed, gas flows up past the outer surface of tube 3 thereby heating it. The secondary reformed gas then leaves the primary reformer via line 16.

## Claims

1. A hydrocarbon secondary steam reforming process wherein a primary reformed hydrocarbon gas stream, containing steam, is partially combusted with an oxygen-containing gas and the combustion products are contacted with a metallic catalyst on a support of a composition comprising at least 95 % by weight of alpha-alumina, less than 0.2 % by weight of silica, less than 0.5 % by weight of alkali, and 0 to 5 % by weight of at least one oxide selected from titania, zirconia, and rare earths, said support having a plurality of through passages and an open area of 40 to 85 %,

characterised in that said support comprises a single unit, or an assembly of polygonal units packed side-by-side, disposed so that the passages extend through the unit in the direction of the flow of said combustion products, each unit having 15 to 40 through passages, per cm$^2$ of unit cross sectional area in the direction perpendicular to the flow of said combustion products, the dimensions of said passages being such that said unit, or assembly of units, has a geometric surface area per volume occupied by said unit, or assembly of units, of 10 to 30 cm$^{-1}$, and the size of said unit, or assembly of units, is such that the volume occupied by said unit, or assembly of units, is 0.05 to 0.4 m³ per t/mol/hr of gas leaving the unit, or assembly of units.

2. A process according to claim 1 wherein each unit comprises at least 99.5 % by weight of alpha alumina.

3. A process according to claim 1 or claim 2 wherein each unit has
   a) a BET surface area of 0.1 to 2 m².g⁻¹ ;
   b) a helium density of at least 3.8 g.cm⁻³ ;
   c) a mercury density of 1.5 to 4 g.cm⁻³ ;
   d) a pore volume of 0 to 0.4 cm₃.g⁻¹ ;
   e) a pore radius of at least 1 000 nm.

4. A process according to any one of claims 1 to 3 wherein the unit, assembly of units, is of circular cross section having a diameter of 7 to 200 cm and has a depth of 5 to 30 cm.

5. A process according to any one of claims 1 to 4 wherein each unit has an open area of 50 to 60 %.

6. A process according to any one of claims 1 to 5 wherein the catalytic metal is rhodium or platinum.

7. A process according to any of claims 1 to 6 comprising contacting a mixture of a hydrocarbon feedstock and steam with a primary reforming catalyst disposed in tubes heated by the secondary reformed gas leaving the secondary reforming catalyst, thereby forming a primary reformed gas stream and using this primary reformed gas stream, optionally with a further quantity of hydrocarbon feedstock, as the gas stream subjected to the partial combustion.

8. Apparatus comprising, in combination ;
   a) a plurality of tubes for containing a primary steam reforming catalyst ;
   b) means to feed a hydrocarbon feedstock and steam to said tubes ;
   c) means to heat the exterior of said tubes ;
   d) a burner ;
   e) means to feed an oxygen-containing gas to the burner ;
   f) means to feed gas from the outlet of said tubes to said burner ;
   g) a supported secondary reforming catalyst downstream of said burner, the support of said catalyst comprising at least 95 % by weight of alpha-alumina, less than 0.2 % by weight of silica, less than 0.5 % by weight of alkali, and 0 to 5 % by weight of at least one oxide selected from titania, zirconia, and rare earths, and having a plurality of through passages and an open area of 40 to 85 %,
characterised in that
   i) said means to heat the tubes comprises means to feed secondary reformed gas leaving the secondary reforming catalyst past the exterior of said tubes whereby heat in said secondary reformed gas may be transferred to said tubes ; and
   ii) said support comprises a single unit, or an assembly of polygonal units packed side-by-side, disposed so that the passages extend through the unit in the direction of the flow of combustion product from said burner, each unit having 15 to 40 through passages, per cm² of unit cross sectional area in the direction perpendicular to said flow of said combustion products, the dimensions of said passages being such that said unit, or assembly of units, has a geometric surface area per volume occupied by said unit, or assembly of units, of 10 to 30 cm⁻¹, and the size of said unit, or assembly of units, is such that the volume occupied by said unit, or assembly of units, is 3 to 40 % of the volume of the space within said tubes for containing said primary steam reforming catalyst.

**Patentansprüche**

1. Verfahren zur Wasserdampf-Sekundärreformierung von Kohlenwasserstoffen, bei dam ein primärreformierter Kohlenwasserstoff-Gasstrom, der Wasserdampf enthält, mit einem sauerstoffhaltigen Gas partiell verbrannt wird und die Verbrennungsprodukte mit einem Metallikatalysator in Berührung gebracht werden, der sich auf einem Träger aus einer Mischung, die wenigstens 95 Masse% alpha-Aluminiumoxid, weniger als 0,2 Masse% Siliciumdioxid, weniger als 0,5 Masse% Alkali und 0 bis 5 Masse% wenigstens eines aus Titandioxid, Zirkoniumdioxid und Seltenerdmetalloxiden ausgewählten Oxids enthält, befindet, wobei der Träger eine Veilzahl von Durchgängen hat und eine offene Fläche von 40 bis 85 % aufweist,
dadurch gekennzeichnet, daß der Träger aus einem einzigen Stück oder aus einer Gruppe von Seite an Seite gepackten polygonalen Stücken besteht, die so angeordnet sind, daß sich die Durchgänge in der Strömungsrichtung der Verbrennungsprodukte durch das Stück hindurch erstrecken, wobei jedes Stück 15 bis 40 Durchgänge je cm² der Querschnittsfläche des Stückes in der zu dem Strom der Verbrennungsprodukte senkrechten Richtung hat, wobei die Abmessungen der Durchgänge derart sind, daß das erwähnte Stück oder die Gruppe von Stücken eine 10 bis 30 cm⁻¹ betragende geometrische Oberfläche je Volumnen, das durch das erwähnte Stück oder die Gruppe von Stücken eingenommen wird, hat und wobei die Größe des erwähnten Stückes oder der Gruppe von Stücken derart ist, daß das Volumen, das durch das erwähnte Stück oder die Gruppe von Stücken eingenommen wird, 0,05 bis 0,4 m³ je 10⁶ mol/h des Gases beträgt, das das Stück oder die Gruppe von Stücken verläßt.

7

2. Verfahren nach Anspruch 1, bei dem jedes Stück wenigstens 99,4 Masse% alpha-Aluminiumoxid enthält.

3. Verfahren nach Anspruch 1 order Anspruch 2, bei dem jedes Stück

a) eine nach der BET-Methode gemessene spezifische Oberfläche von 0,1 bis 2 $m^2.g^{-1}$,

b) eine Helium-Dichte bon wenigstens 3,8 $g.cm^{-3}$,

c) eine Quecksilber-Dichte von 1,5 bis 4 $g.cm^{-3}$,

d) ein Porenvolumen von 0 bis 0,4 $cm^3.g^{-1}$ und

e) einen Porenradius von wenigstens 1 000 nm hat.

4. Verfahren nach einem der Ansprüche 1 bis 3, bei dem das Stück oder die Gruppe von Stücken einen kreisförmigen Querschnitt mit einem Durchmesser von 7 bis 200 cm hat und eine Tiefe von 5 bis 30 cm hat.

5. Verfahren nach einem der Ansprüche 1 bis 4, bei dem jedes Stück eine offene Fläche von 50 bis 60 % hat.

6. Verfahren nach einem der Ansprüche 1 bis 5, bei dem das katalytische Metall Rhodium oder Platin ist.

7. Verfahren nach einem der Ansprüche 1 bis 6, bei dem eine Mischung aus einem Kohlenwasserstoff-Ausgangsmaterial und Wasserdampf mit einem Primärreformierungskatalysator in Berührung gebracht wird, der in Rohren angeordnet ist, die durch das sekundärreformierte Gas, das den Sekundärreformierungskatalysator verläßt, erhitzt werden, wodurch ein primärreformierter Gasstrom gebildet wird, und bei dem dieser primärreformierte Gasstrom, wahlweise mit einer weiteren Menge des Kohlenwasserstoff-Ausgangsmaterials, als der Gasstrom eingesetzt wird, der der partiellen Verbrennung unterzogen wird.

8. Vorrichtung, die in Kombination

a) eine Vielzahl von Rohren zum Aufnehmen eines Wasserdampf-Primärreformierungskatalysators,

b) eine Einrichtung für die Zuführung eines Kohlenwasserstoff-Ausgangsmaterials und von Wasserdampf zu den Rohren,

c) eine Einrichtung zum Erhitzen der Außenseite der Rohre,

d) einen Brenner,

e) eine Einrichtung für die Zuführung eines sauerstoffhaltigen Gases zu dem Brenner,

f) eine Einrichtung für die Zuführung von Gas aus dem Auslaß der Rohre zu dem Brenner und

g) einen Sekundärreformierungs-Trägerkatalysator, der sich bezüglich des Brenners stromabwärts befindet, wobei der Träger des Katalysators wenigstens 95 Masse% alpha-Aluminiumoxid, weniger als 0,2 Masse% Siliciumdioxid, weniger als 0,5 Masse% Alkali und 0 bis 5 Masse% wenigstens eines aus Titandioxid, Zirkoniumdioxid und Seltenerdmetalloxiden ausgewählten Oxids enthält, eine Vielzahl von Durchgängen hat und eine offene Fläche von 40 bis 85 % aufweist, enthält, dadurch gekennzeichnet, daß

i) die Einrichtung zum Erhitzen der Rohre eine Einrichtung zum Vorbeiführen von sekundärreformiertem Gas, das den Sekundärreformierungskatalysator verläßt, an der Außenseite der Rohre umfaßt, wodurch in dem sekundärreformierten Gas enthaltene Wärme an die Rohre übertragen werden kann, und

ii) der Träger aus einem einzigen Stück oder aus einer Gruppe von Seite an Seite gepackten polygonalen Stücken besteht, die so angeordnet sind; daß sich die Durchgänge in der Strömungsrichtung des Verbrennungsprodukts aus dem Brenner durch das Stück hindurch erstrecken, wobei jedes Stück 15 bis 40 Durchgänge je $cm^2$ der Querschnittsfläche des Stückes in der zu dem Strom der Verbrennungsprodukte senkrechten Richtung hat, wobei die Abmessungen der Durchgänge derart sind, daß das erwähnte Stück oder die Gruppe von Stücken eine 10 bis 30 $cm^{-1}$ betragende geometrische Oberfläche je Volumen, das durch das erwähnte Stück oder die Gruppe von Stücken eingenommen wird, hat und wobei die Größe des erwähnten Stückes oder der Gruppe von Stücken derart ist, daß das Volumen, das durch das erwähnte Stück oder die Gruppe von Stücken eingenommen wird, 3 bis 40 % des Volumens des Raumes in den Rohren zum Aufnehmen des Wasserdampf-Primärreformierungskatalysators beträgt.

## Revendications

1. Procédé de reformage à la vapeur secondaire d'hydrocarbures dans lequel un courant primaire de gaz hydrocarboné reformé, contenant de la vapeur, est partiellement brûlé avec un gaz contenant de l'oxygène et des produits de combustion sont mis en contact avec un catalyseur métallique sur un support d'une composition comprenant au moins 95 % en poids d'alpha-alumine, moins de 0,2 % en poids de silice, moins de 0,5 % en poids d'alcalin, et de 0 à 5 % en poids d'au moins un oxyde choisi parmi l'oxyde de titane, l'oxyde de zirconium et des terres rares, ces supports étant traversés par de nombreux passages et ayant une surface ouverte de 40 à 85 %, caractérisé en ce que ce support comprend une seule unité ou un assemblage d'unités polygonales entassées côte à côte, disposées de telle sorte que les passages se prolongent à travers l'unité dans la direction de l'écoulement de ces produits de combustion, chaque unité étant traversée par 15 à 40

passages, par cm$^2$ de surface de l'unité en coupe droite dans la direction perpendiculaire à l'écoulement de ces produits de combustion, les dimensions de ces passages étant telles que cette unité ou cet assemblage d'unités a une aire superficielle géométrique par volume occupé par cette unité ou cet assemblage d'unités de 10 à 30 cm$^{-1}$, et que la dimension de cette unité ou de cet assemblage d'unités est telle que le volume occupé par cette unité ou cet assemblage d'unités est de 0,05 à 0,4 m$^3$ par t.mole/h de gaz quittant l'unité ou l'assemblage d'unités.

2. Procédé suivant la revendication 1, caractérisé en ce que chaque unité comprend au moins 99,5 % en poids d'alpha-alumine.

3. Procédé suivant la revendication 1 ou la revendication 2, caractérisé en ce que chaque unité a :

   a) une aire superficielle BET de 0,1 à 2 m$^2$.g$^{-1}$ ;
   b) une densité d'hélium d'au moins 3,8 g.cm$^{-3}$ ;
   c) une densité de mercure de 1,5 à 4 g.cm$^{-3}$ ;
   d) un volume de pores de 0 à 0,4 cm$^3$.g$^{-1}$ ;
   e) un rayon de pore d'au moins 1 000 nm.

4. Procédé suivant l'une quelconque des revendications 1 à 3, caractérisé en ce que l'unité ou l'assemblage d'unités a une section droite circulaire ayant un diamètre de 7 à 200 cm et a une profondeur de 5 à 30 cm.

5. Procédé suivant l'une quelconque des revendications 1 à 4, caractérisé en ce que chaque unité a une surface ouverte de 50 à 60 %.

6. Procédé suivant l'une quelconque des revendications 1 à 5, caractérisé en ce que le métal catalytique est du rhodium ou du platine.

7. Procédé suivant l'une quelconque des revendications 1 à 6, caractérisé en ce qu'il comprend la mise en contact d'un mélange d'une charge d'alimentation hydrocarbonée et de vapeur avec un catalyseur de reformage primaire disposé dans des tubes chauffés par le gaz reformé secondaire quittant le catalyseur de reformage secondaire, de façon à former un courant de gaz reformé primaire et à utiliser ce courant gazeux reformé primaire, éventuellement avec une autre quantité de charge d'alimentation hydrocarbonée, comme courant de gaz soumis à la combustion partielle.

8. Appareil caractérisé en ce qu'il comprend, en association :

   a) un grand nombre de tubes pour contenir un catalyseur de reformage à la vapeur primaire ;
   b) des moyens pour introduire une charge d'alimentation hydrocarbonée et de la vapeur dans ces tubes ;
   c) des moyens pour chauffer l'extérieur de ces tubes ;
   d) un brûleur ;
   e) des moyens pour introduire un gaz contenant de l'oxygène dans le brûleur ;
   f) des moyens pour envoyer le gaz provenant de la sortie de ces tubes dans ce brûleur ;
   g) un catalyseur de reformage secondaire supporté en aval de ce brûleur, le support de ce catalyseur comprenant au moins 95 % en poids d'alpha-alumine, moins de 0,2 % en poids de silice, moins de 0,5 % en poids d'alcalin et de 0 à 5 % en poids d'au moins un oxyde choisi parmi l'oxyde de titane, l'oxyde de zirconium et des terres rares, et étant traversé par de nombreux passages et ayant une surface ouverte de 40 à 85 %, caractérisé en ce que :

   i) ces moyens pour chauffer les tubes comprennent des moyens pour faire passer le gaz reformé secondaire quittant le catalyseur de reformage secondaire sur l'extérieur de ces tubes si bien que de la chaleur du gaz reformé secondaire peut être transférée à ces tubes ; et

   ii) ce support comprend une seule unité ou un assemblage d'unités polygonales entassées côte à côte disposées de telle sorte que les passages se prolongent à travers l'unité dans la direction de l'écoulement du produit de combustion provenant de ce brûleur, chaque unité étant traversée par 15 à 40 passages par cm$^2$ de surface de l'unité en coupe droite dans la direction perpendiculaire à l'écoulement de ces produits de combustion, les dimensions de ces passages étant telles que cette unité ou cet assemblage d'unités, a une aire superficielle géométrique par volume occupé par cette unité ou cet assemblage d'unités, de 10 à 30 cm$^{-1}$, et la dimension de cette unité, ou cet assemblage d'unités est telle que le volume occupé par cette unité ou cet assemblage d'unités est de 3 à 40 % du volume de l'espace à l'intérieur de ces tubes pour contenir ce catalyseur de reformage primaire à la vapeur.

*Fig.1.*

*Fig.2.*

*Fig.3.*

*Fig.4.*